# EUROPEAN PATENT SPECIFICATION

(11) **EP 1 702 008 B1**
(45) Date of publication and mention of the grant of the patent: **21.01.2009**
(21) Application number: 04793471.6
(22) Date of filing: 13.10.2004
(51) Int. Cl.: C08L 81/02, C08L 27/12

(54) **POLYPHENYLENE SULFIDE THERMOPLASTIC RESIN COMPOSITION**
THERMOPLASTISCHE POLYPHENYLENSULFIDHARZZUSAMMENSETZUNG
COMPOSITION DE RESINE THERMOPLASTIQUE DE SULFURE DE POLYPHENYLENE

(30) Priority: 21.11.2003 KR 2003083009; 02.04.2004 KR 2004023108
(43) Date of publication of application: 20.09.2006
(73) Proprietor: Cheil Industries Inc., Gumi-si, Gyeongsangbuk-do 730-710 (KR)
(72) Inventor: BAEK, Nam Joong, Euiwang-shi, Gyeonggi-do 437-711 (KR); CHUNG, Han Soo, Euiwang-shi, Gyeonggi-do 437-711 (KR)
(74) Representative: Bublak, Wolfgang
(86) International application number: PCT/KR2004/002609
(87) International publication number: WO 2005/049732

(56) References cited:
- EP-A1- 1 225 248
- EP-A2- 0 431 470
- WO-A-20/04108828
- JP-A- 5 295 260
- JP-A- 9 263 676
- JP-A- 9 263 676
- JP-A- 59 207 921
- KR-B1- 93 008 195
- US-A- 4 985 175

## Description

### Field of the Invention

The present invention relates to a polyphenylene sulfide thermoplastic resin composition with good impact strength and flame retardancy. More particularly, the present invention relates to a polyphenylene sulfide thermoplastic resin composition having good flame retardancy and mechanical strength, which comprises a polyphenylene sulfide resin, an olefinic graft copolymer and a fluorinated polyolefin resin.

### Background of the Invention

Recently thermoplastic resins have been applied to the materials for components of electrical or electronic appliances, automobile devices or chemical instruments. Before that, A1 or Zn die casting metals had been conventionally used. However, these metals are now replaced with thermoplastic resins, especially reinforced plastics. These thermoplastic resins especially applied to the materials for electrical or electronic parts require high heat resistance and chemical resistance. Polyphenylene sulfide is one of the resins satisfying this demand. Polyphenylene sulfide has good heat resistance, dimensional stability, chemical resistance, flame retardancy and processability, so it can be suitably employed to the above uses.

However, polyphenylene sulfide has a fundamental disadvantage in that it has poor impact resistance in comparison with other engineering plastics.

In order to improve the impact resistance of polyarylene sulfide resin, methods of adding various elastomers to polyphenylene sulfide resin have been proposed.

Japanese Patent Laid-Open No. 58-154757 discloses a method of adding an epoxy group-containing olefin copolymer to polyphenylene sulfide resin.

In addition, Japanese Patent Laid-Open No. 1-306467 discloses a polyphenylene sulfide composition prepared by incorporating a polyphenylene sulfide, an epoxy group-containing olefin copolymer and an elastomer free from epoxy and acid anhydride groups.

Japanese Patent Laid-Open No.62-172056 discloses a polyphenylene sulfide composition obtained by blending a polyphenylene sulfide and an olefin copolymer graft copolymerized with unsaturated carboxylic acid, its anhydride or derivative thereof.

However, these compositions thus produced are yet insufficient for some uses requiring mechanical strength and impact resistance and therefore are required to be further improved in many cases.

In order to overcome the above problem, the present inventors have developed a polyphenylene sulfide resin composition comprising thermoplastic polyphenylene sulfide resin, olefininc graft copolymer, epoxy compound and inorganic filler, which has improved mechanical strength and izod impact strength, while maintaining processability and dimensional stability.

However, though the impact resistance, especially izod impact strength of the above composition has been improved to some extent, the flame resistance of the polyphenylene sulfide is deteriorated.

Accordingly, the present inventors have developed a polyphenylene sulfide thermoplastic resin composition having good impact resistance and flame retardancy, while maintaining processability, dimensional stability, mechanical strength by adding an olefinic graft copolymer and a fluorinated polyolefin resin to a thermoplastic polyphenylene sulfide. The polyphenylene sulfide thermoplastic resin composition may further contain epoxy compound and inorganic filler.

### Objects of the Invention

An object of the present invention is to provide a polyphenylene sulfide thermoplastic resin composition with good impact resistance.

Another object of the present invention is to provide a Polyphenylene sulfide thermoplastic resin composition with good flame retardancy.

A further object of the present invention is to provide a polyphenylene sulfide thermoplastic resin composition with good heat resistance and chemical resistance.

A further object of the present invention is to provide a polyphenylene sulfide thermoplastic resin composition with good processability

A further object of the present invention is to provide a polyphenylene sulfide thermoplastic resin composition with good dimensional stability.

Other objects and advantages of this invention will be apparent from the ensuing disclosure and appended claims.

### Summary of the Invention

The polyphenylene sulfide thermoplastic resin composition according to the present invention comprises (A) 20 to 99.4 parts by weight of a polyphenylene sulfide resin; (B) 0.5 to 10 parts by weight of olefinic graft copolymer prepared by graft polymerizing (b₁) 40 to 90 parts by weight of a copolymer prepared by polymerizing 60 to 100 % by weight of olefin monomer and 0 to 40 % by weight of vinyl monomer and (b₂) 10 to 60 parts by weight of a vinyl polymer; and (C) 0.1 to 10 parts by weight of a fluorinated polyolefin resin. The polyphenylene sulfide thermoplastic resin composition of the present invention may further contain (D) 0 to 3 parts by weight of an epoxy compound having two or more epoxy groups in one molecule and (E) 0 to 70 parts by weight of a filler.

### Detailed Description of the Invention

### (A) Polyphenylene sulfide resin

The polyphenylene sulfide used in the present invention is a polymer comprising at least 70 molar % of recurring units of the following structural formula. The polyphenylene sulfide comprising at least 70 molar % of recurring units has high degree of crystallization and sufficient heat- and chemical- resistance, and good impact strength.

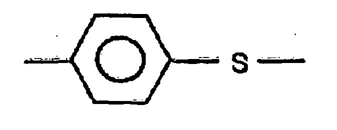

The polyphenylene sulfide of the present invention may be a linear, branched or cross-linked polymer or mixtures of the same.

A method of preparing cross-linked polyphenylene sulfide resin is disclosed in Japanese publication No. 45-3368, and a method of preparing linear polyphenylene sulfide resin is disclosed in Japanese publication No. 52-12240, which are incorporated by reference herein.

The polyphenylene sulfide of the present invention may contain less than 50 molar %, preferably less than 30 molar % of other recurring units of the following structural formulae:

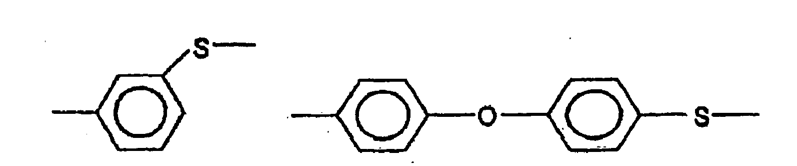

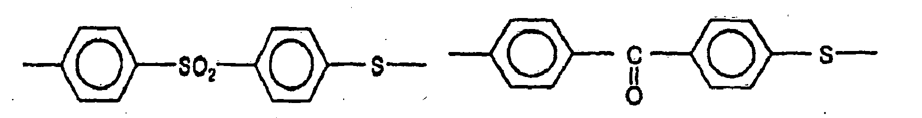

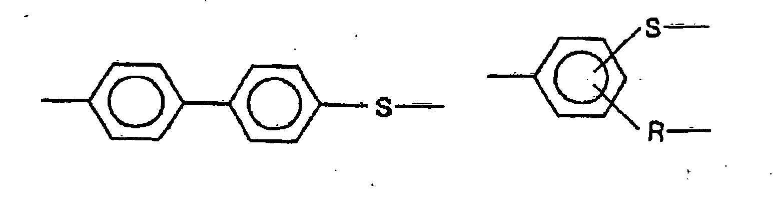

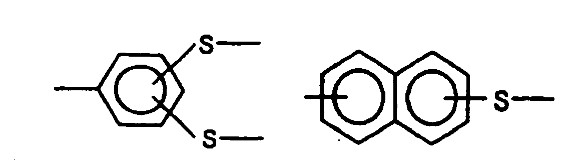

In the present invention, it is preferable that the melt index of polyphenylene sulfide is in the range of 10 to 300 g/10 min under 2.16 kg load at 316°C, considering heat-stability or processability of the resin composition. If the melt index is more than 300 g/10min, the strength is reduced, and if it is less than 10 g/10min, the melt blendability and processability during melt blending and injection molding process will be lowered.

### (B) Olefinic graft copolymer

The olefinic graft copolymer of the present invention is a coplymer prepared by graft polymerizing (b₁) 40 to 90 parts by weight of a copolymer prepared by polymerizing 60 to 100 % by weight of olefin monomer and 0 to 40 % by weight of vinyl monomer and (b₂) 10 to 60 parts by weight of a vinyl polymer.

Examples of the olefin monomer usable in the present invention are ethylene, propylene and butylene and so forth. These olefin monomers may be used in single or in combination as a mixture.

Examples of the vinyl monomer are methyl(meth)acrylate, ethyl(meth)acrylate, butyl(meth)acrylate, and a mixture thereof with maleic anhydride; vinyl acetate; vinyl monomer containing epoxy group such as glycidyl methacrylate, glycidyl acrylate, glycidyl ethacrylate and etc. Among them methyl acrylate, ethyl acrylate/maleic anhydride, vinyl acetate, glycidyl methacrylate and a mixture thereof are preferred.

Examples of the vinyl polymer (b₂) are polymethyl methacrylate, polystyrene, copolymer of styrene and cyanided vinyl monomer such as styreneacrylonitrile copolymer(SAN) and a mixture thereof.

In the present invention, the olefinic graft copolymer is used in an amount of 0.5 to 10 parts by weight. If the amount is less than 0.5 parts, impact modification effect cannot be obtained. If the amount exceeds 10 parts, flame-resistance of the V-0 grade at 0.8 mm cannot be fulfilled.

### (C) Fluorinated polyolefin resin

The examples of the fluorinated polyolefin resin of the present invention are polytetrafluoroethylene, polyvinylidenefluoride, tetrafluoroethylene/vinylidenefluoride copolymer, tetrafluoroethylene/hexafluoropropylene copolymer, and ethylene/tetrafluoroethylene copolymer. The fluorinated polyolefin resin may be used in single or in combination as a mixture.

The fluorinated polyolefin resin functions to form a fibrillar network when the resin composition containing the fluorinated polyolefin resin is extruded, resulting to decrease a flow viscosity and to increase the shrinkage during combustion so as to prevent the dripping phenomena.

The fluorinated polyolefin resin (E) according to the present invention is prepared by a conventional process, for example, the resin is prepared in an aqueous solvent at 7 to 71 kg/cm² and 0 to 200°C, preferably 20∼100°C , in the presence of a free radical forming catalyst such as sodium-, potassium-, or ammonium-peroxydisulphate.

The fluorinated polyolefin resin is used in emulsion state or in powder state. In case using in emulsion state, dispersion of the fluorinated polyolefin resin is good, but the process will be somewhat complicated. Accordingly, if the fluorinated polyolefin resin could be uniformly dispersed in the entire resin composition to form the fibrillar network structure, it is preferable to use the fluorinated polyolefin resin in powder state.

The preferable fluorinated polyolefin resin of the present invention is a polytetrafluoroethylene having an average particle size of 0.05 to 1,000 µm and density of 1.2 to 2.3 g/cm³.

The fluorinated polyolefin resin is used in an amount of 0.1 to 10 parts by weight. If the fluorinated polyolefin resin is used more than 10 parts by weight, the fluorinated resin cannot be dispersed in the resin composition, which makes the extrusion difficult.

### (D) Epoxy compound having two or more epoxy groups

The epoxy compound according to the present invention which contains two or more epoxy groups in one molecule is represented by the following general formula I : 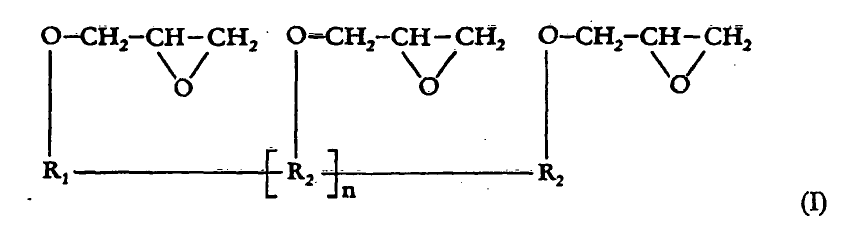 wherein R₁ and R₂ independently of one another are C₆₋₈ aryl group, n is 0 or natural number, preferably 0 or 1.

If an epoxy compound having one epoxy group is used, the resin composition cannot obtain sufficient mechanical strength and impact resistance. And if an epoxy compound having four or more epoxy groups is used, the resin composition has poor flowability due to abrupt reaction.

Examples of the epoxy compound having two or more epoxy groups are polyglycidyl ether compounds, polyglycidyl amine epoxy compounds, bisphenol A type epoxy compounds, bisphenol F type epoxy compounds, resorcinol type epoxy compounds, tetrahydoxy bisphenol F type epoxy compounds, cresol novolak type epoxy compounds, phenol novolak type epoxy compounds, cycloaliphatic epoxy compounds, and so on. Among them, bisphenol A type epoxy compounds is preferred in view of impact resistance or extrusion workability of the resin composition

The epoxy compound having two or more epoxy groups of the present invention is used in an amount of 0 to 3 parts by weight.

### (E) Filler

The filler used in the present invention includes fibrous fillers, powdery filler and a mixture thereof. Examples of the fibrous fillers include glass fiber, carbon fiber, aramid fiber, potassium titanate fiber, silicon carbide fiber, wollastonite and so on. Examples of the powdery filler include calcium carbonate, silica, titanium oxide, carbon black, alumina, litium carbonate, iron oxide, molybdenum disulfide, graphite, glass beads, talc, clay mica, zirconium oxide, calcium silicate, boron nitride and so on.

The filler of the present invention is used in an amount of 0 to 70 parts by weight

The polyphenylene sulfide thermoplastic resin composition of the present invention may further contain other additives such as antioxidants, release agents, flame retardants, lubricants, colorants such as dyes and pigments, and small amounts of various polymers according to purposes.

The resin compositions of the present invention can be prepared by any known method. For example, all the components and additives are mixed together and extruded through an extruder and are prepared in the form of pellets.

The resin compositions of the present invention of the present invention can be applied to various processes for molding and formed into various molded articles. Especially the compositions are suitably applied to substitute materials for Mg or Al die casting, electric or electronic parts, precision parts which require good mechanical strength, processability and impact resistance.

The present invention may be better understood by reference to the following examples that are intended for the purpose of illustration and are not to be construed as in any way limiting the scope of the present invention, which is defined in the claims appended hereto. In the following examples, all parts and percentage are by weight unless otherwise indicated.

### Examples

The components used in Examples and Comparative Examples are as follows:
(A) Polyphenylene sulfide resin
   Polyphenylene sulfide resin (PPS) with a melt index (MI) of 50 to 100 g/10 min at 316°C under 2.16 kg load manufactured by DIC Co. of Japan was used.
(B) Olefinic graft copolymer
   Modiper A4400 (product name) of Nippon oil fats Co. was used.
(C) Fluorinated polyolefin resin
   Teflon (registered trademark) 7AJ by Dupont company was used.
(D) Epoxy compound having two or more epoxy groups
   (d₁) epoxy compound having two epoxy groups
   ERL-4221 (product name) of Union Carbide was used.
   (d₂) epoxy compound having three epoxy groups
   EOCN-1045 (product name) of Nippon Kayaku Co. was used.

### (E) Filler

Glass fiber manufactured by Korea Owens Coming company of 13 µm of filament diameter, 3 mm of chopped length, treated with amino silane and methacryloxy silane as coupling agents, lubricant and sizing agent was used

### Examples 1∼4

The components as shown in Table 1, an antioxidant and a heat stabilizer were added in a conventional mixer, then the mixture was extruded through a twin screw extruder with L/D=36 and Φ =45 mm to prepare a product in pellet form. The produced pellet was molded into test specimens using a 10 oz injection molding machine at 320°C and flame retardancy and other physical properties of the test specimens were measured.

### Comparative Examples 1∼4

Comparative Examples 1∼4 were conducted in the same manner as in the Example 1∼4 except that the amount of each component was altered.

**Table 1**

| | | Examples | | | | Comparative Examples | | | |
|---|---|---|---|---|---|---|---|---|---|
| | | 1 | 2 | 3 | 4 | 1 | 2 | 3 | 4 |
| (A) Polyphenylene Sulfide | | 94 | 53 | 53 | 49 | 95 | 54 | 54 | 43 |
| (B) Olefinic Graft Copolymer | | 5 | 5 | 5 | 5 | 5 | 5 | 5 | 15 |
| (C) Fluorinated Polyolefin Resin | | 1 | 1 | 1 | 5 | - | - | - | 1 |
| (D) Epoxy Compound | (D₁) | - | 1 | - | - | - | 1 | - | - |
| | (D₂) | - | - | 1 | 1 | - | - | 1 | 1 |
| (E) Filler | | - | 40 | 40 | 40 | - | 40 | 40 | 40 |

The specimens in the Examples 1∼4 and the Comparative Examples 1∼4 were placed and maintained at 23°C and a relative humidity of 50% for 48 hours and then the physical properties of the specimens were measured by the following manner:
(1) Flame retardancy: the flame retardancy was measured in accordance with UL94 VB with a thickness of 0.8 mm.
(2) Flexural strength: the flexural strength was measured in accordance with ASTM D790.
(3) Impact strength: The notch Izod impact strength was measured in accordance with ASTM D256 (1/8" notched).

The test results were shown in Table 2 below:

**Table 2**

| | Examples | | | | Comparative Examples | | | |
|---|---|---|---|---|---|---|---|---|
| | 1 | 2 | 3 | 4 | 1 | 2 | 3 | 4 |
| UL94 flame retardancy (0.8mm) | V-0 | V-0 | V-0 | V-0 | V-1 | V-1 | V-1 | V-1 |
| Flexural strength (kg/cm²) | 1300 | 2450 | 2500 | 2500 | 1300 | 2450 | 2500 | 2200 |
| Notch Izod impact strength (kg cm/cm) | 2 | 12 | 13 | 13 | 2 | 12 | 13 | 11 |

As shown in Table 2, the resin compositions of Example 1 employing polyphenylene sulfide, olefinic graft copolymer and fluorinated polyolefm resin shows good flame retardancy compared to comparative Examples 1. In addition, the resin compositions of Examples 2-4 which further contain epoxy compound and filler show improved mechanical properties.

The present invention can be easily carried out by an ordinary skilled person in the art. Many modification and changes may be deemed to be with the scope of the present invention as defined in the following claims.

## Claims

1. A polyphenylene sulfide thermoplastic resin composition comprising:
(A) 20 to 99.4 parts by weight of a polyphenylene sulfide resin;
(B) 0.5 to 10 parts by weight of an olefinic graft copolymer grafted by (b₁) 40 to 90 parts by weight of a copolymer prepared by polymerizing 60 to 100 % by weight of olefin monomer and 0 to 40 % by weight of vinyl monomer and (b₂) 10 to 60 parts by weight of a vinyl polymer; and
(C) 0.1 to 10 parts by weight of a fluorinated polyolefin resin.

2. The polyphenylene sulfide thermoplastic resin composition as defined in claim 1, wherein further containing (D) 0 to 3 parts by weight of an epoxy compound represented by the following Formula (I): 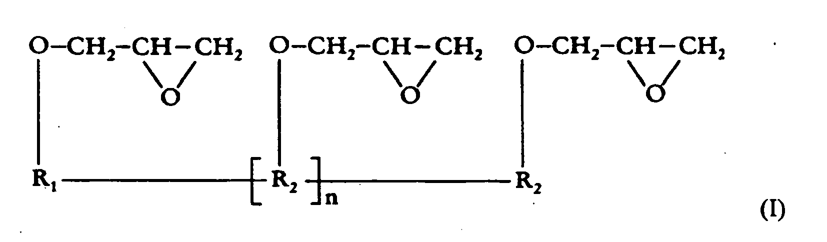 wherein R₁ and R₂ independently of one another are C₆₋₈ aryl group, n is 0 or natural number.

3. The polyphenylene sulfide thermoplastic resin composition as defined in claims 1 or 2, wherein further containing (E) 0 to 70 parts by weight of a filler.

4. The polyphenylene sulfide thermoplastic resin composition as defined in claim 1, wherein said polyphenylene sulfide contains at least 70 molar % of recurring units of the following structural formula and said polyphenylene sulfide has a melt index in the range of 10 to 300 g/10 min under 2.16 kg loading at 316°C:

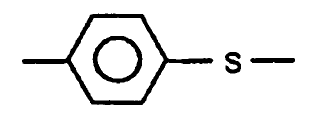

5. The polyphenylene sulfide thermoplastic resin composition as defined in claim 1, wherein said olefin monomer is selected from the group consisting of ethylene, propylene and butylene and a mixture thereof.

6. The polyphenylene sulfide thermoplastic resin composition as defined in claim 1, wherein said vinyl monomer is selected from the group consisting of methyl(meth)acrylate, ethyl(meth)acrylate, butyl(meth)acrylate, and a mixture thereof with maleic anhydride; vinyl acetate; glycidyl methacrylate, glycidyl acrylate, glycidyl ethacrylate and a mixture thereof.

7. The polyphenylene sulfide thermoplastic resin composition as defined in claim 1, wherein said vinyl polymer is selected from the group consisting of polymethyl methacrylate, polystyrene, copolymer of styrene and cyanided vinyl monomer and a mixture thereof.

8. The polyphenylene sulfide thermoplastic resin composition as defined in claim 1, wherein said fluorinated polyolefin resin has an average particle size of 0.05 to 1,000 µm and density of 1.2 to 2.3 g/cm³.

9. The polyphenylene sulfide thermoplastic resin composition as defined in claim 2, wherein said epoxy compound is selected from the group consisting of polyglycidyl ether compounds, polyglycidyl amine epoxy compounds, bisphenol A type epoxy compounds, bisphenol F type epoxy compounds, resorcinol type epoxy compounds, tetrahydoxy bisphenol F type epoxy compounds, cresol novolak type epoxy compounds, phenol novolak type epoxy compounds, cycloaliphatic epoxy compounds.

## Patentansprüche

1. Thermoplastische Polyphenylensulfidharzzusammensetzung, umfassend:
(A) 20 bis 99,4 Gewichtsteile eines Polyphenylensulfidharzes;
(B) 0,5 bis 10 Gewichtsteile eines olefinischen Pfropfcopolymers, das durch (b₁) 40 bis 90 Gewichtsteile eines Copolymers, hergestellt durch Polymerisieren von 60 bis 100 Gew.-% Olefinmonomer und 0 bis 40 Gew.-% Vinylmonomer, und (b₂) 10 bis 60 Gewichtsteile eines Vinylpolymers gepfropft ist; und
(C) 0,1 bis 10 Gewichtsteile eines fluorierten Polyolefinharzes.

2. Thermoplastische Polyphenylensulfidharzzusammensetzung nach Anspruch 1, ferner enthaltend (D) 0 bis 3 Gewichtsteile einer Epoxyverbindung der folgenden Formel (I) 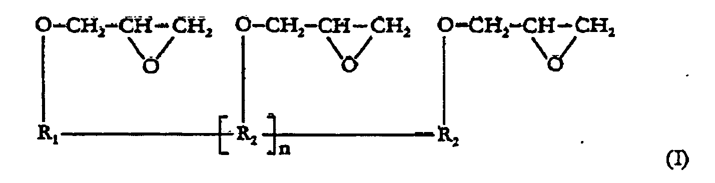 wobei R₁ und R₂ unabhängig voneinander für C₆₋₈-Arylgruppen stehen, n für 0 oder eine natürliche Zahl steht.

3. Thermoplastische Polyphenylensulfidharzzusammensetzung nach Anspruch 1 oder 2, ferner enthaltend (E) 0 bis 70 Gewichtsteile eines Füllstoffs.

4. Thermoplastische Polyphenylensulfidharzzusammensetzung nach Anspruch 1, wobei das Polyphenylensulfid mindestens 70 mol-% Wiederholungseinheiten der folgenden Strukturformel enthält und das Polyphenylensulfid einen Schmelzindex im Bereich von 10 bis 300 g/10 Min. unter einer Last von 2,16 kg bei 316°C aufweist:

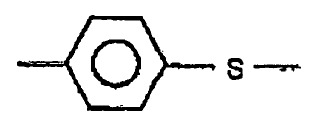

5. Thermoplastische Polyphenylensulfidharzzusammensetzung nach Anspruch 1, wobei das Olefinmonomer ausgewählt ist aus der Gruppe, bestehend aus Ethylen, Propylen und Butylen und einem Gemisch davon.

6. Thermoplastische Polyphenylensulfidharzzusammensetzung nach Anspruch 1, wobei das Vinylmonomer ausgewählt ist aus der Gruppe, bestehend aus Methyl(meth)acrylat, Ethyl(meth)acrylat, Butyl(meth)acrylat und einem Gemisch davon mit Maleinsäureanhydrid; Vinylacetat; Glycidylmethacrylat, Glycidylacrylat, Glycidylethacrylat und einem Gemisch davon.

7. Thermoplastische Polyphenylensulfidharzzusammensetzung nach Anspruch 1, wobei das Vinylpolymer ausgewählt ist aus der Gruppe, bestehend aus Polymethylmethacrylat, Polystyrol, Copolymer von Styrol und Cyanidvinylmonomer und einem Gemisch davon.

8. Thermoplastische Polyphenylensulfidharzzusammensetzung nach Anspruch 1, wobei das fluorierte Polyolefinharz eine mittlere Teilchengröße von 0,05 bis 1.000 µm und eine Dichte von 1,2 bis 2,3 g/cm³ aufweist.

9. Thermoplastische Polyphenylensulfidharzzusammensetzung nach Anspruch 2, wobei die Epoxyverbindung ausgewählt ist aus der Gruppe, bestehend aus Polyglycidyletherverbindungen, Polyglycidylaminepoxyverbindungen, Epoxyverbindungen vom Bisphenol-A-Typ, Epoxyverbindungen vom Bisphenol-F-Typ, Epoxyverbindungen vom Resorcinoltyp, Epoxyverbindungen vom Tetrahydroxybisphenol-F-Typ. Epoxyverbindungen vom Cresolnovolaktyp, Epoxyverbindungen vom Phenolnovolaktyp, cycloaliphatischen Epoxyverbindungen.

## Revendications

1. Composition de résine thermoplastique de poly(sulfure de phénylène), comprenant :
(A) 20 à 99,4 parties en poids d'une résine de poly(sulfure de phénylène) ;
(B) 0,5 à 10 parties en poids d'un copolymère oléfinique greffé, sur lequel on a greffé (b₁) 40 à 90 parties en poids d'un copolymère préparé par polymérisation de 60 à 100 % en poids d'un monomère oléfinique et de 0 à 40 % en poids d'un monomère vinylique, et (b₂) 10 à 60 parties en poids d'un polymère vinylique ; et
(C) 0,1 à 10 parties en poids d'une résine de polyoléfine fluorée.

2. Composition de résine thermoplastique de poly(sulfure de phénylène) selon la revendication 1, qui contient en outre (D) 0 à 3 parties en poids d'un composé époxy représenté par la formule (I) ci-après : 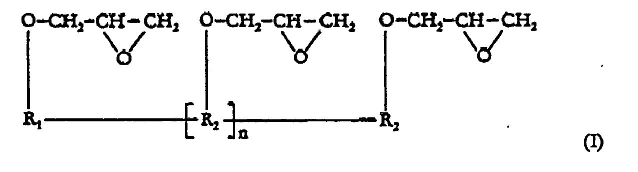 dans laquelle R₁ et R₂ représentent chacun indépendamment de l'autre un groupe aryle en C₆₋₈, n vaut 0 ou est un nombre entier.

3. Composition de résine thermoplastique de poly(sulfure de phénylène) selon la revendication 1 ou 2, qui contient en outre (E) 0 à 70 parties en poids d'une charge.

4. Composition de résine thermoplastique de poly(sulfure de phénylène) selon la revendication 1, dans laquelle ledit poly(sulfure de phénylène) contient au moins 70 % en moles de motifs répétitifs ayant la formule développée suivante, et ledit poly(sulfure de phénylène) a un indice de fluidité compris dans la plage de 10 à 300 g/10 min sous une charge de 2,16 kg à 316°C

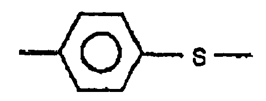

5. Composition de résine thermoplastique de poly(sulfure de phénylène) selon la revendication 1, dans laquelle ledit monomère oléfinique est choisi dans le groupe consistant en l'éthylène, le propylène, le butylène et les mélanges de ceux-ci.

6. Composition de résine thermoplastique de poly(sulfure de phénylène) selon la revendication 1, dans laquelle ledit monomère vinylique est choisi dans le groupe consistant en le (meth)acrylate de méthyle, le (meth)acrylate d'éthyle, le (meth)acrylate de butyle et les mélanges de ceux-ci avec l'anhydride maléique ; l'acétate de vinyle, le méthacrylate de glycidyle, l'acrylate de glycidyle, l'éthacry-late de glycidyle et les mélanges de ceux-ci.

7. Composition de résine thermoplastique de poly(sulfure de phénylène) selon la revendication 1, dans laquelle ledit polymère vinylique est choisi dans le groupe consistant en le poly(méthacrylate de méthyle), le polystyrène, les copolymères du styrène et d'un monomère vinylique cyanuré, et les mélanges de ceux-ci.

8. Composition de résine thermoplastique de poly(sulfure de phénylène) selon la revendication 1, dans laquelle ladite résine de polyoléfine fluorée a une granulométrie moyenne de 0,05 à 1000 µm, et une masse volumique de 1,2 à 2,3 g/cm³.

9. Composition de résine thermoplastique de poly(sulfure de phénylène) selon la revendication 2, dans laquelle ledit composé époxy est choisi dans le groupe consistant en les composés polyglycidyléthers, les composés époxy de type polyglycidylamine, les composés époxy de type bisphénol A, les composés époxy de type bisphénol F, les composés époxy de type résorcinol, les composés époxy de type tétrahydro bisphénol F, les composés époxy de type novolaque de crésol, les composés époxy de type novolaque de phénol et les composés époxy cycloaliphatiques.
